# EUROPEAN PATENT APPLICATION

(11) **EP 4 258 164 A1**
(43) Date of publication of application: **11.10.2023**
(21) Application number: 21913505.0
(22) Date of filing: 11.11.2021
(51) Int. Cl.: G06K 17/00

(54) **COMMUNICATION METHOD AND RELATED DEVICE**

(30) Priority: 31.12.2020 CN 202011639661
(71) Applicant: Huawei Technologies Co., Ltd., Longgang District Shenzhen, Guangdong 518129 (CN)
(72) Inventor: FENG, Xibao, Shenzhen, Guangdong 518129 (CN); WU, Yiling, Shenzhen, Guangdong 518129 (CN); QU, Weilin, Shenzhen, Guangdong 518129 (CN); LI, Chenwan, Shenzhen, Guangdong 518129 (CN)
(74) Representative: Isarpatent
(86) International application number: PCT/CN2021/130071
(87) International publication number: WO 2022/142762

(57) **Abstract**

Embodiments of this application disclose a communication method, applied to a radio frequency identification communication system, and the radio frequency identification communication system includes a reader/writer and a tag connected to the reader/writer. The method according to embodiments of this application includes: The reader/writer receives first information sent by the tag, where the first information is the 1^{st} piece of information that is sent by the tag and that is received by the reader/writer in an inventory process. The reader/writer may identify, in the inventory process, tags of different types based on a capability that is of the tag and that is actively reported by the tag.

## Description

This application claims priority to Chinese Patent Application No. 202011639661.0, filed with the China National Intellectual Property Administration on December 31, 2020 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

In recent years, radio frequency identification (radio frequency identification, RFID) technology, as a type of automatic identification technology, has been developed rapidly at home and abroad. The radio frequency identification technology has advantages of fast reading speed and wide application range, and is widely used in various fields.

RFID is a non-contact automatic identification technology. An RFID system includes a reader/writer and a tag. A radio frequency signal and spatial coupling and transmission features of the radio frequency signal are used to automatically identify static or moving objects. RFID can be used to trace and manage managed objects in many fields, has features such as high accuracy, a long reading distance, a large storage data amount, and high durability, and is widely used in product production, logistics, and sales.

However, processes in which a reader/writer interacts with a plurality of tags are the same. In an inventory process, the reader/writer cannot identify tags of different types.

### SUMMARY

Embodiments of this application provide a communication method. After a reader/writer receives first information, the reader/writer may determine a capability of a tag based on the first information, so as to distinguish the tag from another tag.

A first aspect of embodiments of this application provides a communication method. The method may be performed by a reader/writer, or may be performed by a component (for example, a processor, a chip, or a chip system) of the reader/writer. The method is applied to a radio frequency identification communication system, the radio frequency identification communication system includes a reader/writer and a tag connected to the reader/writer, and the method includes: The reader/writer receives first information sent by the tag, where the first information is the 1^{st} piece of information that is sent by the tag and that is received by the reader/writer in an inventory process. The reader/writer determines a capability of the tag based on the first information, where the capability is used by the reader/writer to distinguish the tag from another tag.

In embodiments of this application, after the reader/writer receives the first information, the reader/writer may determine the capability of the tag based on the first information, so as to distinguish the tag from another tag. The reader/writer can identify tags of different types in an inventory process based on the capability that is of the tag and that is actively reported by the tag.

Optionally, in a possible implementation of the first aspect, classification corresponding to the capability of the tag in the foregoing step includes at least one of the following: whether the tag is a power consumption saving tag; whether the tag is a tag whose transmission distance is greater than a threshold; whether the tag is a tag that supports channel coding; whether the tag is a tag that supports modulation; or whether the tag is a tag that supports sharing a memory with a sensor.

In this possible implementation, a plurality of cases of classification corresponding to a tag are provided, so that the reader/writer manages tags of different classifications.

Optionally, in a possible implementation of the first aspect, the capability of the tag in the foregoing step includes at least one of the following: a command that is delivered by the reader/writer and that is supported by the tag; a channel coding scheme supported by the tag; a modulation scheme supported by the tag; a sensor type supported by the tag; a quantity of sessions supported by the tag, where the sessions are used by the reader/writer to manage a plurality of tags; or a size of a storage space in the tag.

In this possible implementation, the reader/writer may distinguish the tag from another tag based on the foregoing specific capability.

Optionally, in a possible implementation of the first aspect, the first information in the foregoing step includes a 16-bit random number and capability information, where the 16-bit random number is used by the tag to identify information sent by the reader/writer to the tag, and the capability information indicates the capability of the tag.

In this possible implementation, the reader/writer may directly determine the capability of the tag based on the capability information.

Optionally, in a possible implementation of the first aspect, the first information in the foregoing step is a 16-bit random number, where the 16-bit random number includes a first target bit and a second target bit, the first target bit indicates the capability of the tag, and the second target bit is used by the tag to identify information sent by the reader/writer to the tag. That the reader/writer determines a capability of the tag based on the first information includes: The reader/writer determines the capability of the tag based on the first target bit.

In this possible implementation, the reader/writer determines the capability of the tag based on the first target bit in the RN 16, so that bits including random number information can be saved in a subsequent interaction process.

Optionally, in a possible implementation of the first aspect, the foregoing step further includes: The reader/writer sends second information to the tag, where a random number in the second information does not have the first target bit.

In this possible implementation, the first target bit is saved in the random number, to save information bits.

Optionally, in a possible implementation of the first aspect, the foregoing step further includes: The reader/writer sends second information to the tag, where the second information includes the 16-bit random number.

Optionally, in a possible implementation of the first aspect, the second information in the foregoing step includes at least one of the following: acknowledge information, where the acknowledge information is used by the reader/writer to obtain a factory number of the tag; or random number request information, where the random number request information is used by the reader/writer to obtain a new 16-bit random number.

In this possible implementation, the first target bit may be saved in the acknowledge information and the random number request information that are sent by the reader/writer to the tag, to reduce sizes of the information.

Optionally, in a possible implementation of the first aspect, the first information in the foregoing step includes a preamble header; and that the reader/writer determines a capability of the tag based on the first information includes: The reader/writer determines the capability of the tag based on the preamble header.

In this possible implementation, the reader/writer may determine the capability of the tag based on the preamble header of the received information.

Optionally, in a possible implementation of the first aspect, the foregoing step further includes: The reader/writer sends query information to the tag, where the query information is used by the reader/writer to obtain the capability of the tag.

In this possible implementation, the tag may passively report the capability of the tag, and the tag reports the capability of the tag to the reader/writer only after the reader/writer sends the query information to the tag.

Optionally, in a possible implementation of the first aspect, the foregoing step further includes: If there are a plurality of pieces of first information that are sent by the tag and that are received by the reader/writer, the reader/writer combines the plurality of pieces of first information, to improve coverage of the reader/writer.

In this possible implementation, the coverage of the reader/writer is improved by repeatedly sending the first information.

A second aspect of embodiments of this application provides a communication method. The method may be performed by a tag, or may be performed by a component (for example, a processor, a chip, or a chip system) of the tag. The method is applied to a radio frequency identification communication system. The radio frequency identification communication system includes a reader/writer and a tag connected to the reader/writer. The method includes: The tag sends first information to the reader/writer, where the first information is the 1^{st} piece of information sent by the tag to the reader/writer in an inventory process, the first information is used by the reader/writer to determine a capability of the tag, and the capability is used by the reader/writer to distinguish the tag from another tag.

In this embodiment of this application, the tag may actively report the capability of the tag to the reader/writer, so that the reader/writer can distinguish the tag based on the capability of the tag.

Optionally, in a possible implementation of the second aspect, classification corresponding to the capability of the tag in the foregoing step includes at least one of the following: whether the tag is a power consumption saving tag; whether the tag is a tag whose transmission distance is greater than a threshold; whether the tag is a tag that supports channel coding; whether the tag is a tag that supports modulation; or whether the tag is a tag that supports sharing a memory with a sensor.

In this possible implementation, a plurality of cases of classification corresponding to a tag are provided, so that the reader/writer manages tags of different classifications.

Optionally, in a possible implementation of the second aspect, the capability of the tag in the foregoing step includes at least one of the following: a command that is delivered by the reader/writer and that is supported by the tag; a channel coding scheme supported by the tag; a modulation scheme supported by the tag; a sensor type supported by the tag; a quantity of sessions supported by the tag, where the sessions are used by the reader/writer to manage a plurality of tags; or a size of a storage space in the tag.

In this possible implementation, the reader/writer may distinguish the tag from another tag based on the foregoing specific capability.

Optionally, in a possible implementation of the second aspect, the first information in the foregoing step includes a 16-bit random number and capability information, where the 16-bit random number is used by the tag to identify information sent by the reader/writer to the tag, and the capability information indicates the capability of the tag.

In this possible implementation, the reader/writer determines the capability of the tag based on a first target bit in the RN 16, so that bits including random number information can be saved in a subsequent interaction process.

Optionally, in a possible implementation of the second aspect, the first information in the foregoing step is a 16-bit random number, where the 16-bit random number includes a first target bit and a second target bit, the first target bit indicates the capability of the tag, and the second target bit is used by the tag to identify information sent by the reader/writer to the tag.

In this possible implementation, the first target bit is saved in the random number, to save information bits.

Optionally, in a possible implementation of the second aspect, the foregoing step further includes: The tag receives second information sent by the reader/writer, where a random number in the second information does not have the first target bit.

In this possible implementation, the first target bit is saved in the random number, to save information bits.

Optionally, in a possible implementation of the second aspect, the foregoing step further includes: The tag receives second information sent by the reader/writer, where the second information includes the 16-bit random number.

In the possible implementation,
Optionally, in a possible implementation of the second aspect, the second information in the foregoing step includes at least one of the following: acknowledge information, where the acknowledge information is used by the reader/writer to obtain a factory number of the tag; or random number request information, where the random number request information is used by the reader/writer to obtain a new 16-bit random number.

In this possible implementation, the first target bit may be saved in the acknowledge information and the random number request information that are sent by the reader/writer to the tag, to reduce sizes of the information.

Optionally, in a possible implementation of the second aspect, the first information in the foregoing step includes a preamble header, and the preamble header is used by the reader/writer to identify the capability information of the tag.

In this possible implementation, the reader/writer may determine the capability of the tag based on the preamble header of the received information.

Optionally, in a possible implementation of the second aspect, the foregoing step further includes: The tag receives query information sent by the reader/writer, where the query information is used by the reader/writer to obtain the capability of the tag.

In this possible implementation, the tag may passively report the capability of the tag, and the tag reports the capability of the tag to the reader/writer only after the reader/writer sends the query information to the tag.

Optionally, in a possible implementation of the second aspect, the foregoing step further includes: The tag repeats a step in which the tag sends the first information to the reader/writer, to improve a transmission range of the first information.

In this possible implementation, the transmission range of the first information is increased by repeatedly sending the first information.

A third aspect of embodiments of this application provides a reader/writer, where the reader/writer is used in a radio frequency identification communication system, the radio frequency identification communication system includes the reader/writer and a tag connected to the reader/writer, and the reader/writer includes: a receiving unit, configured to receive first information sent by the tag, where the first information is the 1^{st} piece of information that is sent by the tag and that is received by the reader/writer in an inventory process; and a determining unit, configured to determine a capability of the tag based on the first information, where the capability is used by the reader/writer to distinguish the tag from another tag.

Optionally, in a possible implementation of the third aspect, classification corresponding to the capability of the tag includes at least one of the following: whether the tag is a power consumption saving tag; whether the tag is a tag whose transmission distance is greater than a threshold; whether the tag is a tag that supports channel coding; whether the tag is a tag that supports modulation; or whether the tag is a tag that supports sharing a memory with a sensor.

Optionally, in a possible implementation of the third aspect, the capability of the tag includes at least one of the following: a command that is delivered by the reader/writer and that is supported by the tag; a channel coding scheme supported by the tag; a modulation scheme supported by the tag; a sensor type supported by the tag; a quantity of sessions supported by the tag, where the sessions are used by the reader/writer to manage a plurality of tags; or a size of a storage space in the tag.

Optionally, in a possible implementation of the third aspect, the first information includes a 16-bit random number and capability information, where the 16-bit random number is used by the tag to identify information sent by the reader/writer to the tag, and the capability information indicates the capability of the tag.

Optionally, in a possible implementation of the third aspect, the first information is a 16-bit random number, where the 16-bit random number includes a first target bit and a second target bit, the first target bit indicates the capability of the tag, and the second target bit is used by the tag to identify information sent by the reader/writer to the tag. The determining unit of the reader/writer is specifically configured to determine the capability of the tag based on the first target bit.

Optionally, in a possible implementation of the third aspect, the reader/writer further includes a sending unit, configured to send second information to the tag, where a random number in the second information does not have the first target bit.

Optionally, in a possible implementation of the third aspect, the reader/writer further includes a sending unit, configured to send second information to the tag, where the second information includes the 16-bit random number.

Optionally, in a possible implementation of the third aspect, the second information includes at least one of the following: acknowledge information, where the acknowledge information is used by the reader/writer to obtain a factory number of the tag; or random number request information, where the random number request information is used by the reader/writer to obtain a new 16-bit random number.

Optionally, in a possible implementation of the third aspect, the first information includes a preamble header; and the determining unit is specifically configured to determine the capability of the tag based on the preamble header.

Optionally, in a possible implementation of the third aspect, the reader/writer further includes: the sending unit, configured to send query information to the tag, where the query information is used by the reader/writer to obtain the capability of the tag.

Optionally, in a possible implementation of the third aspect, the reader/writer further includes: a combination unit, configured to: if there are a plurality of pieces of first information that are sent by the tag and that are received by the reader/writer, combine the plurality of pieces of first information, to improve coverage of the reader/writer.

A fourth aspect of embodiments of this application provides a tag. The tag is used in a radio frequency identification communication system, the radio frequency identification communication system includes a reader/writer and the tag connected to the reader/writer, and the tag includes: a sending unit, configured to send first information to the reader/writer, where the first information is the 1^{st} piece of information sent by the tag to the reader/writer in an inventory process, the first information is used by the reader/writer to determine a capability of the tag, and the capability is used by the reader/writer to distinguish the tag from another tag.

Optionally, in a possible implementation of the fourth aspect, classification corresponding to the capability of the tag includes at least one of the following: whether the tag is a power consumption saving tag; whether the tag is a tag whose transmission distance is greater than a threshold; whether the tag is a tag that supports channel coding; whether the tag is a tag that supports modulation; or whether the tag is a tag that supports sharing a memory with a sensor.

Optionally, in a possible implementation of the fourth aspect, the capability of the tag includes at least one of the following: a command that is delivered by the reader/writer and that is supported by the tag; a channel coding scheme supported by the tag; a modulation scheme supported by the tag; a sensor type supported by the tag; a quantity of sessions supported by the tag, where the sessions are used by the reader/writer to manage a plurality of tags; or a size of a storage space in the tag.

Optionally, in a possible implementation of the fourth aspect, the first information includes a 16-bit random number and capability information, where the 16-bit random number is used by the tag to identify information sent by the reader/writer to the tag, and the capability information indicates the capability of the tag.

Optionally, in a possible implementation of the fourth aspect, the first information is a 16-bit random number, where the 16-bit random number includes a first target bit and a second target bit, the first target bit indicates the capability of the tag, and the second target bit is used by the tag to identify information sent by the reader/writer to the tag.

Optionally, in a possible implementation of the fourth aspect, the tag further includes: a receiving unit, configured to receive second information sent by the reader/writer, where a random number in the second information does not have the first target bit.

Optionally, in a possible implementation of the fourth aspect, the tag further includes: a receiving unit, configured to receive second information sent by the reader/writer, where the second information includes the 16-bit random number.

Optionally, in a possible implementation of the fourth aspect, the second information includes at least one of the following: acknowledge information, where the acknowledge information is used by the reader/writer to obtain a factory number of the tag; or random number request information, where the random number request information is used by the reader/writer to obtain a new 16-bit random number.

Optionally, in a possible implementation of the fourth aspect, the first information includes a preamble header, and the preamble header is used by the reader/writer to identify the capability information of the tag.

Optionally, in a possible implementation of the fourth aspect, the tag further includes: a receiving unit, configured to receive query information sent by the reader/writer, where the query information is used by the reader/writer to obtain the capability of the tag.

Optionally, in a possible implementation of the fourth aspect, the sending unit is further configured to repeat a step in which the tag sends the first information to the reader/writer, to improve a transmission range of the first information.

A fifth aspect of embodiments of this application provides a tag. The tag is used in a radio frequency identification communication system, and states that are of a state machine and that are supported by the tag include a ready state, an arbitrate state, a reply state, an acknowledged state, and a secured state, but do not include an open state and/or a killed state.

A sixth aspect of embodiments of this application provides a tag. The tag is used in a radio frequency identification communication system, and a storage space of the tag does not store an access password and/or a kill password.

A seventh aspect of embodiments of this application provides a tag. The tag is used in a radio frequency identification communication system, the tag supports two of four sessions, and the sessions are used by a reader/writer to manage a plurality of tags.

An eighth aspect of embodiments of this application provides a reader/writer. The reader/writer or a component (for example, a processor, a chip, or a chip system) of the reader/writer performs the method according to any one of the first aspect or the possible implementations of the first aspect.

A ninth aspect of embodiments of this application provides a tag. The tag or a component (for example, a processor, a chip, or a chip system) of the tag performs the method according to any one of the second aspect or the possible implementations of the second aspect.

A tenth aspect of embodiments of this application provides a computer-readable storage medium. The computer-readable storage medium stores instructions. When the instructions are executed on a computer, the computer is enabled to perform the method in any one of the first aspect or the possible implementations of the first aspect, or any one of the second aspect or the possible implementations of the second aspect.

An eleventh aspect of embodiments of this application provides a computer program product. When the computer program product is executed on a computer, the computer is enabled to perform the method in any one of the first aspect or the possible implementations of the first aspect, or any one of the second aspect or the possible implementations of the second aspect.

A twelfth aspect of embodiments of this application provides a reader/writer, including a processor. The processor is coupled to a memory, and the memory is configured to store a program or instructions. When the program or the instructions are executed by the processor, the reader/writer is enabled to implement the method in any one of the first aspect or the possible implementations of the first aspect.

A thirteenth aspect of embodiments of this application provides a tag, including a processor. The processor is coupled to a memory, and the memory is configured to store a program or instructions. When the program or the instructions are executed by the processor, the tag is enabled to implement the method in any one of the second aspect or the possible implementations of the second aspect.

For technical effects brought by any one of the third aspect, the eighth aspect, the tenth aspect, the eleventh aspect, and the twelfth aspect, or the possible implementations thereof, refer to technical effects brought by the first aspect or different possible implementations of the first aspect. Details are not described herein again.

For technical effects brought by any one of the fourth aspect, the fifth aspect, the sixth aspect, the seventh aspect, the tenth aspect, the eleventh aspect, and the thirteenth aspect, or the possible implementations thereof, refer to technical effects brought by the second aspect or different possible implementations of the second aspect. Details are not described herein again.

It may be learned from the foregoing technical solutions that, embodiments of this application have the following advantages: After the reader/writer receives the first information, the reader/writer may determine the capability of the tag based on the first information, so as to distinguish the tag from another tag. The reader/writer can identify the tags of different types in the inventory process based on the capability that is of the tag and that is actively reported by the tag.

### BRIEF DESCRIPTION OF DRAWINGS

FIG. 1 is a schematic diagram of a communication system according to an embodiment of this application;
FIG. 2 is a schematic diagram of operations by a reader/writer or a tag and states of the tag in a conventional technology;
FIG. 3 is a schematic diagram of an inventory process in RFID;
FIG. 4A and FIG. 4B are a schematic working diagram of a tag state machine and signaling in a conventional technology;
FIG. 5 is a schematic division diagram of a storage space of a tag in a conventional technology;
FIG. 6 is a schematic flowchart of a communication method according to an embodiment of this application;
FIG. 7 is a schematic diagram of operations by a reader/writer or a tag and states of the tag according to an embodiment of this application;
FIG. 8 is a schematic working diagram of a tag state machine and signaling according to an embodiment of this application;
FIG. 9 is a schematic division diagram of a storage space of a tag according to an embodiment of this application;
FIG. 10 is a schematic diagram of a structure of a reader/writer according to an embodiment of this application;
FIG. 11 is a schematic diagram of another structure of a reader/writer according to an embodiment of this application;
FIG. 12 is a schematic diagram of a structure of a tag according to an embodiment of this application;
FIG. 13 is a schematic diagram of another structure of a tag according to an embodiment of this application;
FIG. 14 is a schematic diagram of another structure of a reader/writer according to an embodiment of this application; and
FIG. 15 is a schematic diagram of another structure of a tag according to an embodiment of this application.

### DESCRIPTION OF EMBODIMENTS

Embodiments of this application provide a communication method. After a reader/writer receives first information, the reader/writer may determine a capability of a tag based on the first information, so as to distinguish the tag from another tag.

The following describes in detail implementation principles, specific implementations, and beneficial effects of the technical solutions of this application with reference to the accompanying drawings.

Some terms or concepts in embodiments of this application are first explained, so as to facilitate understanding by a person skilled in the art.

An RFID technology is an automatic identification technology that uses sensing, radio waves, or microwaves to perform contactless bidirectional communication for identification and data exchange purposes. This technology can be used to track and manage all physical objects.

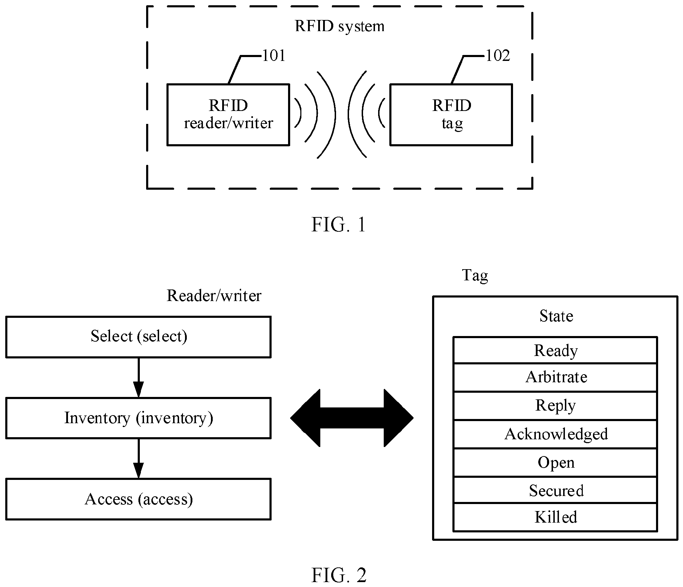

FIG. 1 illustrates an example architecture of an RFID system. The RFID system includes an RFID reader/writer (also referred to as a reader/writer, a card reader, and the like, hereinafter a reader/writer for short) 101 and an RFID tag (hereinafter referred to as a tag for short) 102. The RFID reader/writer 101 and the RFID tag 102 may communicate with each other through a radio frequency (radio frequency, RF) signal.

The RFID reader/writer 101 may transmit a query RF signal, and the RFID tag 102 near the RFID reader/writer 101 may detect the query RF signal sent by the RFID reader/writer 101, and return a reply RF signal to the RFID reader/writer 101, where the reply RF signal may carry related information of the RFID tag 102.

The RFID reader/writer 101 may detect and parse the reply RF signal.

The tag 102 in this embodiment of this application may be a passive tag, an active tag, or a semi-active tag based on an energy supply manner. If the tag 102 is a passive tag, in other words, the tag 102 does not have a power supply, the tag 102 may obtain energy from the query RF signal.

Active tag (active tag): An active electronic tag is also referred to as an active tag, uses an in-card battery to provide all or part of energy for a microchip, but does not provide energy for data transmission between the tag and a transponder. An identification distance is long (up to more than 10 meters), but a service life is limited (3 to 10 years) and a price is high. An active RFID reader/writer can monitor all active tags within a range of 100 meters.

A battery in a semi-passive tag (semi-passive tag) supplies power to only a circuit that requires power supply to maintain data and that is in the tag or a tag circuit that consumes little power supply and that uses a voltage required for a tag chip as an auxiliary support. Before entering a working state, the tag is in a dormant state, and is equivalent to a passive tag. The battery inside the tag consumes little energy. Therefore, the battery can maintain effective for several years or even 10 years. When the tag enters a reading region of a reader, the tag is excited by a radio frequency signal sent by the reader. When the tag enters the working state, energy support for information exchange from the tag to the reader (in a reflecting modulation scheme) is mainly radio frequency energy provided by the reader. The battery inside the tag is mainly used to compensate for insufficient radio frequency field strength in a position where the tag is located. Energy of the battery inside the tag is not converted into radio frequency energy.

The passive tag does not include a battery, and does not have a built-in battery. When the electronic tag is beyond a reading range of the reader, the electronic tag is in a passive state. When the electronic tag is within the reading range of the reader, the electronic tag extracts, from the radio frequency energy emitted by the reader, a power supply required for working. The passive electronic tag generally uses the reflecting modulation scheme to complete transmission of information about the electronic tag to the reader. The passive tag is applicable in a range of about 10 cm to a few meters. The passive tag is small in weight and size, and has a long service life. However, a transmission distance of the passive tag is limited. In addition, transmit power of a reader/writer is required to be high, and power consumption of a working circuit of a transponder is required to be low.

It can be understood that, the RFID tag may also have other classification manners. In different modulation schemes, the RFID tag may be of an active type, a passive type, or a semi-active type. The RFID tag may be a read-only tag or a read-write tag depending on whether stored information is rewritten. The RFID tag may be a credit card tag, a linear tag, a paper-shape tag, a glass tube tag, a round tag, or a special-purpose irregular-shaped tag in different encapsulation forms.

It should be understood that FIG. 1 shows the RFID reader/writer 101 and the RFID tag 102 as an example. In the architecture of FIG. 1, the RFID reader/writer 101 may communicate with a plurality of RFID tags 102, and the RFID system may include a plurality of RFID reader/writers 101. This is not limited in embodiments of the present invention.

A current protocol processing flow of the tag 102 is shown in FIG. 2, and tag work is mainly completed in a mode of state machine transition and based on signaling.

The reader/writer manages a tag group (namely, a plurality of tags) based on three basic operations (select, inventory, and access). The tag in the RFID system supports seven states: ready (ready), arbitrate (arbitrate), reply (reply), acknowledged (acknowledged), open (open), secured (secured), and killed (killed).

The following describes the three basic operations and the seven states.

### 1. Select (select) process

The reader/writer selects a quantity of tags for operations of inventory and access. The reader/writer delivers a select command. The select command can continuously select the specific quantity of tags according to a criterion specified by a user.

### 2. Inventory (inventory) process

For tags 102 of the foregoing different classifications, there is no difference in the inventory process.

An operation in which the reader/writer identifies the tag is as follows. The reader/writer starts an inventory round (inventory round) in one of four sessions (sessions) by sending a query (query) command. One or more tags may respond. The responding tag replies to the received inventory command only when a collision slot is 0, and a reply message carries RN 16 generated by the tag. The reader/writer detects a single tag reply and requests a PC, an EPC, and a CRC-16 of the tag.

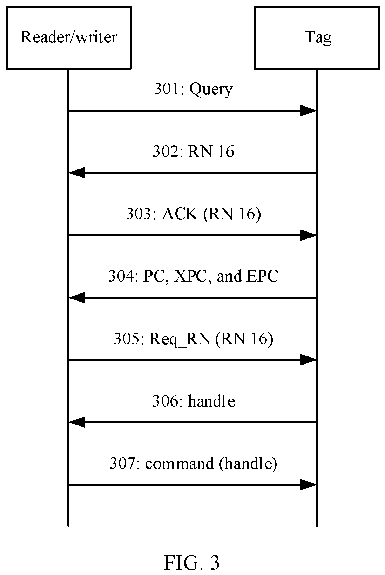

As shown in FIG. 3, inventory includes a plurality of commands, and operations in an inventory round can be performed only in one session.

Inventory includes step 301 to step 307. The following describes the steps.

Step 301: A reader/writer sends a query-type command to a tag, for example, query (query), query adjust (query adjust), and query repeat (query rep).

Step 302: The tag sends a 16-bit random number (RN 16) to the reader/writer.

The tag sends the RN 16 to the reader/writer based on the received query-type command.

Step 303: The reader/writer sends acknowledge (acknowledge, ACK) information to the tag, where the ACK information may carry RN 16.

Step 304: If the RN 16 in the ACK information is the same as the RN 16 stored in the tag, the tag determines that the ACK information is valid ACK information, and sends a factory number such as a personal computer (personal computer, PC) number, an extended protocol control (extended protocol control, XPC), and an electronic product code (electronic product code, EPC) to the reader/writer.

Step 305: The reader/writer sends random number request (Req_RN) information to the tag, where the Req_RN information may carry RN 16.

Step 306: After the tag receives the Req_RN information, if an access password (access password) of the Req_RN is not 0, the tag sends new RN 16, namely, a handle (handle), to the reader/writer.

Step 307: After receiving the new RN 16, when the reader/writer subsequently sends a command (command) to the tag, the command carries the new RN 16.

### 3. Access (access) process

An operation of communication (reading from or writing to the tag) between the reader/writer and the tag is as follows. A single tag needs to be uniquely identified before being accessed. Access includes a plurality of commands, and some commands use one-time mask encoding based on a link from the reader/writer to the tag.

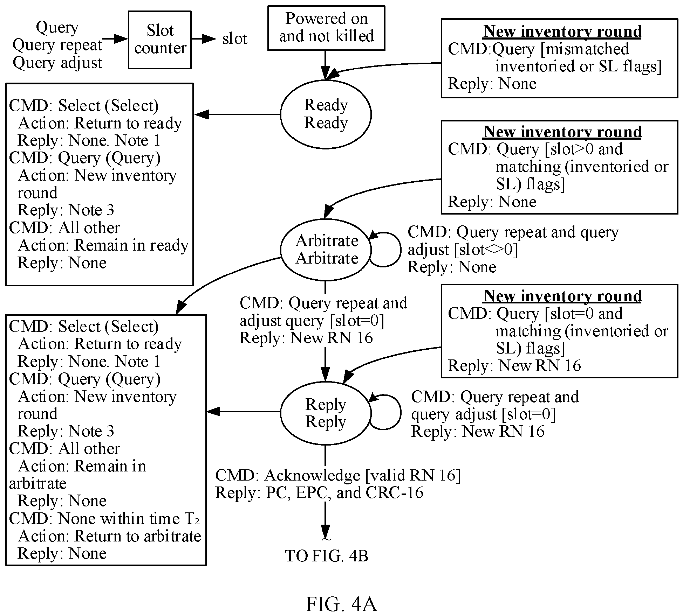

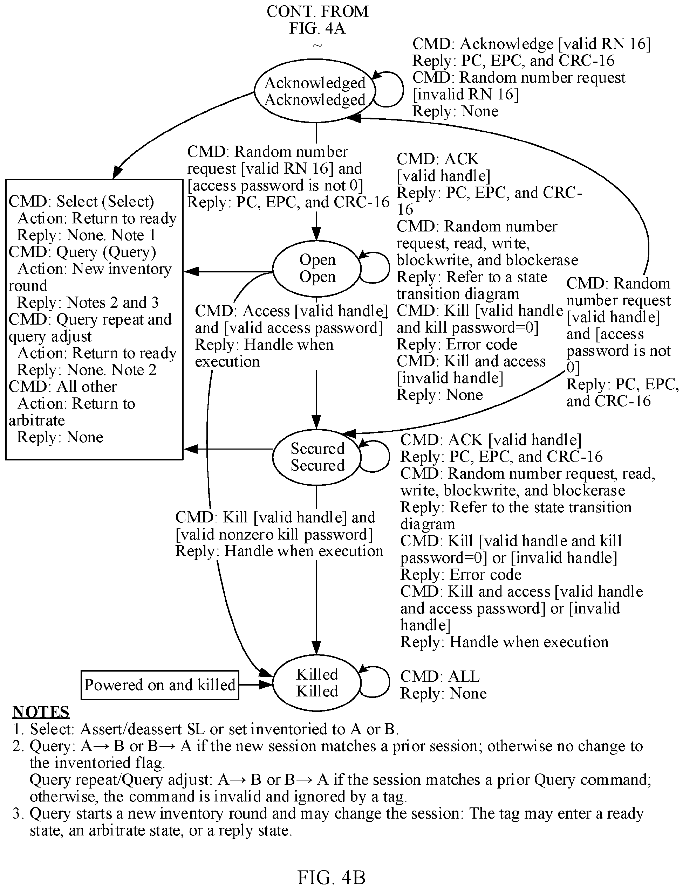

Currently, the tag 102 supports seven states. State transition is triggered by different reader/writer commands. A specific correspondence between signaling and state transition is shown in FIG. 4A and FIG. 4B.

Signaling corresponding to the tag group managed by the reader/writer is further explained as follows: The tags are powered on and are not killed, the state machine is in a ready state, the tags keep the state until the tags receive a query command, and an inventory parameter (in which a session is specified by the query command) of a tag and sel in the query command are consistent with a current flag state of the tag. The matched tag extracts a bit of data from a random number generator (random numeral generator, RNG) of the matched tag and loads the data into a slot (slot) counter. When the slot counter is not zero, the tag transitions to an arbitrate state. When the slot counter is zero, the tag transitions to a reply state. When the tag enters the reply state, the tag is to reply with RN 16. If the tag receives a valid acknowledge (ACK), the tag is to transition to an acknowledged state, and replies with a PC, an EPC, and a cyclic redundancy check (cyclic redundancy check, CRC)-16 of the tag. If the tag fails to receive an ACK or receives an invalid ACK, the tag returns to the arbitrate state. The tag and the reader/writer need to meet a time sequence requirement.

When the tag in the acknowledged state receives a Req_RN command with an access password that is not zero, the tag is to transition to an open state, and replies with new RN16 (namely, a handle). The reader/writer uses the handle in subsequent commands, and the tag uses the handle in subsequent replies. The tag in the open state can execute all access commands except a Lock command. The tag in the open state can transition to any state except the acknowledged state.

When the tag in the acknowledged state receives a Req_RN command with an access password that is zero, the tag is to transition to a secured state, and replies with new RN16, namely, a handle. The reader/writer uses the handle in subsequent commands, and the tag uses the handle in subsequent replies. When the tag in the open state receives a valid access command with an access password that is not zero, the tag is to transition to the secured state, and keeps the handle replied when the tag transitions from the acknowledged state to the open state. The tag in the secured state can execute all access commands. The tag in the secured state can transition to any state except the open state and the acknowledged state.

The tag is to be in a killed state: When receiving a kill command with a valid non-zero kill password (kill password) and a valid handle, the tag in the open state or the secured state is to enter the killed state. In killed, the tag is permanently disabled. When entering the killed state, the tag is to notify the reader/writer that a kill operation is successful, and the tag is to no more respond to a command of the reader/writer. A killed tag needs to be in the killed state in all environments and enter the killed state immediately after power-on. The kill operation is irreversible.

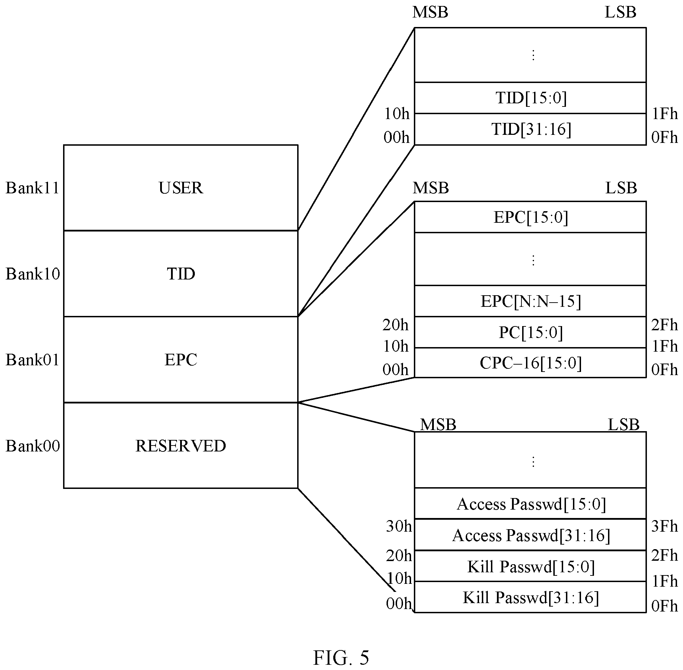

In the foregoing process, obtaining manners of the EPC, the access password, and the like are stored in specified storage spaces on the tag. Logically, a storage area of the tag is divided into four different storage areas, and each repository area includes more than one memory word. A logical storage mapping table is shown in FIG. 5, and these storage areas are as follows.

### 1. Reserved storage area (reserved area)

The reserved storage area is used to store passwords (such as a kill password and an access password) required for kill and access functions. The kill password is stored in storage addresses 00h to 1Fh, and the access password is stored in storage addresses 20h to 3Fh. If there is a tag whose kill password and/or access password are/is not executed, the tag is like with a zero-value password and is permanently read/write locked. The zero-value password does not need to be stored in a password storage area in the reserved storage area.

### 2. Electronic product code storage area (EPC area)

A CRC-16 is stored in addresses 00h to 0Fh, a protocol control bit (PC) is stored in addresses 10h to 1Fh, and a code (such as an EPC code) that is used to identify an object to which the tag is attached is stored in addresses 20h and greater. The PC is subdivided. An EPC code length is stored in addresses 10h to 14h, an RFU is stored in addresses 15h to 17h, and a numeric system identifier (numeric system identifier, NSI) is stored in addresses 18h to 1Fh. The CRC-16, the PC, and the EPC are stored in a manner of most significant bit first (a most significant bit of the EPC code is stored in the address 20h).

### 3. Tag identification number storage area (TID area)

An 8-bit class identification code (where for example, a code of EPC global is 11100010_2) assigned by the international organization for standardization (international organization for standardization, ISO)/international electrotechnical commission (international electrotechnical commission, IEC) 15693 is stored in addresses 00h to 07h. A TID repository needs to include abundant identification information in an area above the address 07h, so that the reader/writer can uniquely identify a customized command and (or) an optional command supported by the tag. For a tag whose class number is 111000102 assigned by the ISO/IEC 15693, the identification information forms a 12-bit tag mask designer identifier (free for EPC global members) and a 12-bit tag model number. The tag mask designer identifier is stored in 08h to 13h, and the model number is stored in addresses 14h to 1Fh. The tag may store, in a region whose TID region address is greater than 1Fh, data (such as a sequence number of the tag) specific to the tag and a provider.

### 4. User storage area (user area)

The user storage area allows storage of user-specific data, and a storage organization structure of the storage area is user-defined.

The tag and the reader/writer that comply with the EPC Class1 Gen2 (G2 for short) protocol need to support the following eleven mandatory commands: select (select), query (query), query Adjust (query adjust), queryRep (query repeat), ACK (EPC reply), NAK (return to arbitrate), Req_RN (random number request), read (read), Write (write), Kill (kill), and Lock (lock).

The tag and the reader/writer that comply with the G2 protocol support or may not support three optional commands: Access (access), BlockWrite (block write), and BlockErase (block erase).

For the RFID system described above, the reader/writer processes a plurality of tags in the same manner, in other words, the reader/writer cannot distinguish the tags.

To resolve the foregoing problem, in this application, the tag reports a capability, so that the reader/writer can distinguish the tag from another tag based on the capability of the tag.

The following describes a communication method in an embodiment of this application with reference to the communication system in FIG. 1 and the inventory procedure in FIG. 3.

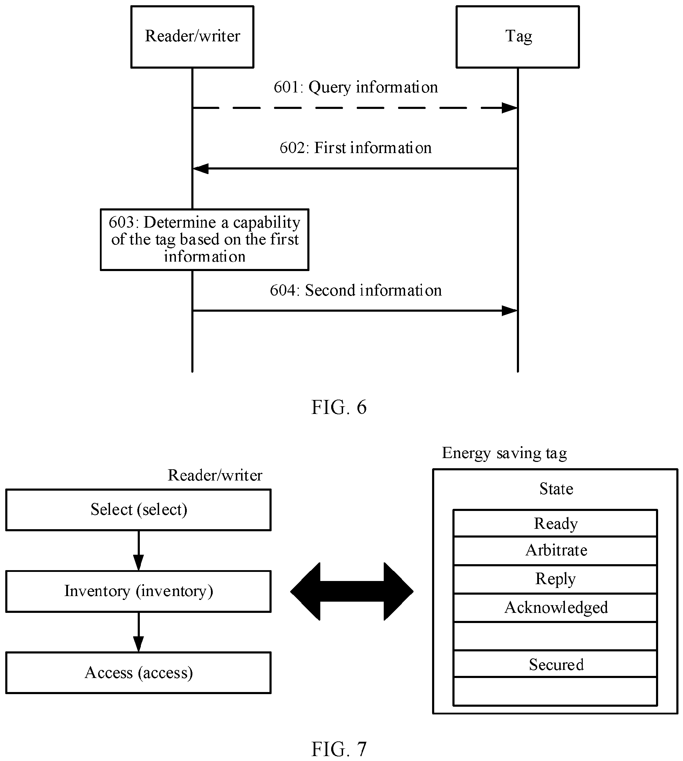

FIG. 6 shows a communication method according to an embodiment of this application. The communication method may be applied to an RFID communication system. An embodiment of the communication method includes the following steps.

Step 601: A reader/writer sends query information to a tag, and this step is optional.

Optionally, when there are a plurality of tags, to avoid collision of RNs 16 of the tags, the reader/writer may classify the tags based on capabilities of the tags. Therefore, when the tags of different categories are close to the reader/writer, a collision probability of the RNs 16 may be reduced to some extent. Alternatively, tags of different capabilities are distinguished in a manner of obtaining the specific capabilities of the tags by the reader/writer, to help the reader/writer subsequently manage the tags.

The reader/writer sends the query information to the tag, where the query information is used by the reader/writer to obtain the capability of the tag.

In embodiments of this application, there are a plurality of classification manners corresponding to the capability of the tag. The following briefly uses several examples for example description.
1. Whether the tag is a power consumption saving tag

Optionally, the power consumption saving tag may be understood as at least one of the following: the tag reduces some unnecessary commands (which are described below), states of a tag state machine do not include open and/or killed, a reserved storage area of the tag is empty, a quantity of sessions supported by the tag is less than 4 (which is described in detail below), and the like.

2. Whether the tag is a tag whose transmission distance is greater than a threshold

Optionally, the tag whose transmission distance is greater than the threshold may be understood as a tag with a wide transmission range. The tag may increase coverage of a reverse link by performing channel coding on information or repeatedly sending information. The reverse link is a link from the tag to the reader/writer.

Optionally, for capabilities (such as a channel coding capability) that the tag can actively enable or disable, if the reader/writer does not enable these capabilities at the beginning, the reader/writer does not sense the channel coding capability of the tag, and the tag may add a specific preamble header to the information, so that the reader/writer learns of a channel coding scheme used for the information.

Optionally, for the capabilities that the tag can actively enable or disable, there may be a delay in enabling these capabilities. Whether the tag uses the capability after sending first information may be default, or may depend on a configuration of the reader/writer for the tag.

If a manner of repeatedly sending the information is used, the reader/writer may blindly detect and combine a plurality of pieces of information, thereby improving coverage of the reader/writer.
3. Whether the tag is a tag that supports channel coding
4. Whether the tag is a tag that supports modulation
5. Whether the tag is a tag that supports sharing a memory with a sensor

Optionally, the sensor may be sensors of different types such as an optical sensor and a thermal sensor. The thermal sensor is used as an example. The reader/writer may perform, based on the tag, an operation of monitoring an item to which the tag is attached and alarming. Specifically, a case may be as follows: If the reader/writer learns that the tag supports sharing the memory with the sensor, the reader/writer configures a threshold for the tag, and triggers an alarm when a temperature value stored in the tag is greater than the threshold.

Optionally, the memory shared by the tag and the sensor may be at least one of the four storage areas shown in FIG. 5. For example, the memory shared by the tag and the sensor is the user storage area (user area).

It may be understood that the foregoing several classification manners are merely examples. In actual application, another classification manner corresponding to the capability of the tag may be set based on a requirement. This is not specifically limited herein.

In embodiments of this application, capabilities of the tag may be classified into a capability of supporting a protocol stack, a capability of a PHY layer, a storage capability, and the like. This is not specifically limited herein.

In embodiments of this application, there are a plurality of specific capabilities of the tag. The following briefly uses several examples for description.

### 1. A command that is delivered by the reader/writer and that is supported by the tag (which can also be understood as a capability related to an air interface)

Optionally, the command includes a mandatory command and an optional command.

The mandatory command may include: select (select), query (query), query Adjust (query adjust), queryRep (query repeat), ACK (EPC reply), NAK (return to arbitrate), Req_RN (random number request), read (read), Write (write), Kill (kill), Lock (lock), and the like. This is not specifically limited herein.

The optional command may include: Access (access), BlockWrite (block write), BlockErase (block erase), and the like. This is not specifically limited herein.

The tag may support the mandatory commands but does not support the optional commands. Alternatively, the tag may support the mandatory commands and at least one of the optional commands.

Optionally, if the first information sent by the tag to the reader/writer is RN 16, a first target bit in the RN 16 indicates the capability of the tag. In this case, the first target bit may be saved in information that includes a random number and that is subsequently transmitted between the reader/writer and the tag. In other words, compared with 16 bits in a conventional technology, the first target bit of 1 bit or less bits may be saved, thereby saving an amount of information transmitted over the air interface.

### 2. Channel coding scheme supported by the tag

Optionally, the channel coding scheme may include a coding scheme such as a low-density parity check (low-density parity check, LDPC) code or a polar (polar) code. This is not specifically limited herein.

### 3. Modulation scheme supported by the tag

Optionally, the modulation scheme may include amplitude modulation, frequency modulation, and phase modulation. The modulation scheme may further include a specific modulation scheme such as differential phase shift keying (differential phase shift keying, DPSK) or quadrature amplitude modulation (quadrature amplitude modulation, QAM). This is not specifically limited herein.

### 4. Sensor type supported by the tag

Optionally, the sensor type may be a light sensor, a thermal sensor, or the like. This is not specifically limited herein.

### 5. Quantity of sessions supported by the tag, where the sessions are used by the reader/writer to manage a plurality of tags

Currently, there may be two sessions supported by tags, and the sessions may be session 0 and session 2, or may be session 1 and session 3, or may be session 0 and session 1, or may be session 2 and session 3, or the like. This is not specifically limited herein.

In other words, the reader/writer may know which session is supported by a tag, so that inventory may be separately performed on tags supporting different sessions, thereby reducing collision between the tags.

### 6. Storage space in the tag

Optionally, the storage space in the tag may indicate whether the storage space in the tag is that shown in FIG. 5, in other words, the tag includes several storage areas. The storage space in the tag may also indicate whether the storage space in the tag stores an access password and/or a kill password. If the tag does not support some sessions, the storage space in the tag may also not store flag bits of the sessions. This is not specifically limited herein.

### 7. State that is of the state machine and that is supported by the tag

Optionally, the state that is of the state machine and that is supported by the tag may indicate whether the tag supports a state, or that the tag does not support a state.

For example, the state that is of the state machine and that is not supported by the tag may be an Open state and/or a Killed state.

It may be understood that the foregoing several specific capabilities of the tag are merely examples. In an actual application, the tag may further include a specific capability in another form. This is not specifically limited herein.

Step 602: The tag sends the first information to the reader/writer.

The tag may actively report the first information (for example, report the first information once at an interval of a time period), or may passively report the first information (to be specific, the tag sends the first information to the reader/writer after receiving the query information sent by the reader/writer). This is not specifically limited herein.

In this embodiment of this application, the first information has a plurality of forms, and the forms are described below.
1. The first information includes RN 16, where the first information indicates a classification of the tag or the specific capability of the tag (which may also be understood as that the reader/writer may identify the capability of the tag based on the first information), and the RN 16 is used by the tag to identify information of the tag from broadcast information of the reader/writer (which may also be understood as that the RN 16 is used by the tag to identify information sent by the reader/writer to the tag).

Optionally, the first information may include the RN 16 and capability information, and the capability information indicates the classification of the tag or the specific capability of the tag.

Optionally, the first information sent by the tag is a user-specific control command.

Optionally, if the first information indicates the classification of the tag, tags may be classified into different categories (categories) based on a save characteristic of the tag. For example, the categories are classified into category 0 and category 1, where category 0 represents a normal (normal) tag, and category 1 represents a save (save) tag. The capability of the save tag may be at least one of the plurality of capabilities described in step 602, and the classification of the tag is not specifically limited herein.

For example, a format of the first information may be shown in Table 1.

**Table 1**

| | First information | Tag category: save tag |
|---|---|---|
| #of bits | 16 | 1 |
| description | RN 16 | 0--normal |
| | | 1--save |

The category of the tag is indicated by adding 1 bit, where 0 represents a normal tag, and 1 represents a save tag. Certainly, 0 may alternatively represent a save tag, and 1 may alternatively represent a normal tag. This is not specifically limited herein.

In embodiments of this application, the category of the tag may alternatively be indicated in a multi-bit manner. This is not specifically limited herein.

Optionally, if the classification of the tag is determined depending on whether the tag supports the channel coding capability, the first information may indicate, by using one or more bits, the reader/writer whether the tag supports the channel coding capability. For example, tags are classified into a tag that supports (support) the channel coding capability and a tag that does not support (not support) the channel coding capability.

For example, another format of the first information may be shown in Table 2.

**Table 2**

| | First information | Tag category: save tag |
|---|---|---|
| #of bits | 16 | 1 |
| description | RN 16 | 0 or null--not support |
| | | 1--support |

Whether the tag supports the channel coding capability is indicated by adding one bit, where 0 indicates that the tag does not support the channel coding capability, and 1 indicates that the tag supports the channel coding capability. Certainly, 0 may alternatively indicate that the tag supports the channel coding capability, and 1 may alternatively indicate that the tag does not support the channel coding capability. This is not specifically limited herein.

In embodiments of this application, whether the tag supports the channel coding capability may alternatively be indicated in a multi-bit manner. This is not specifically limited herein.

Optionally, if the first information indicates the specific capability of the tag, the capability of the tag may be identified based on one or more bits in the first information, and the capability of the tag may be at least one of the plurality of capabilities described in the foregoing step 602. Details are not described herein again.

2. The first information is RN 16, and the RN 16 includes a first target bit and a second target bit, where the first target bit indicates the capability of the tag, and the second target bit is used by the tag to identify information of the tag from broadcast information of the reader/writer (which may also be understood as that the second target bit is used by the tag to identify information sent by the reader/writer to the tag).

In embodiments of this application, the first target bit and the second target bit may occupy one or more bits. The following uses one bit only as an example for description. This is not specifically limited herein.

Optionally, one or more bits in the RN 16 indicate category information of the tag.

For example, a first bit in the RN 16 indicates whether the tag is a normal tag or a save tag, where 0 indicates the normal tag, and 1 indicates the save tag. Definitely, 0 may alternatively represent the save tag, and 1 may alternatively represent the normal tag.

For example, a second bit in the RN 16 indicates whether the tag supports a channel coding capability, where 0 indicates that the tag does not support the channel coding capability, and 1 indicates that the tag supports the channel coding capability.

Optionally, a first bit in the RN 16 indicates a specific capability of the tag, where 0 indicates that the tag does not support a capability of a classification, and 1 indicates that the tag supports a capability of a classification. For the capability of the classification, refer to the descriptions of the capability in step 601. Details are not described herein again.

In this embodiment of this application, the first information has a plurality of forms. The foregoing several forms are merely examples. In actual application, the first information may be in another form. This is not specifically limited herein.

In a possible design, the reader/writer may increase a transmission range of the first information. In embodiments of this application, there are a plurality of manners in which the tag increases the transmission range of the first information. The following separately describes the manners.
(1) The tag supports the channel coding capability.

Optionally, a preamble header of first information sent by the tag that supports the channel coding capability is different from a preamble header of first information sent by a tag that does not support the channel coding capability.

For example, the first information is encoded by using a supported capability such as a polar code, and the preamble header of the first message is different from the preamble header corresponding to the tag that does not support the channel coding capability, so that the reader/writer can identify that another coding scheme is used for the message. The reader/writer is aligned with the capability of the tag, which may be a default configuration, or may be that a special preamble header can be used only by a tag of a specific channel coding capability or some determined capabilities as required by the reader/writer in an indication in a broadcast-type command such as Select or Query, or may be that the reader/writer indicates a plurality of preamble headers to support different channel coding capabilities.

Optionally, for a tag having a capability, after the tag reports the capability, the capability may be enabled by default, or in subsequent communication with the reader/writer, the reader/writer may send a start indication command through dedicated signaling.

For example, when the capability is the channel coding capability, a feature of the command may be shown in Table 3.

**Table 3**

| Command | code | Lengt h | Mandatory Command (Y/N) | Reply Type | SecureComm (Y/N) | AhthComm (Y/N) | Mandatory (Y/N) | Protection |
|---|---|---|---|---|---|---|---|---|
| ChannelENcode | 11101111 | >25 | No | Immediate | Yes | Yes | Yes | CRC-16 |
| ChannelENcode Rely | 11101110 | >9 | No | Immediate | Yes | Yes | Yes | CRC-16 |

The command between the reader/writer and the tag may include ChannelENcode and ChannelENcodeRely, where ChannelENcode is control information sent by the reader/writer to the tag, and ChannelENcodeRely is reply information of the tag for the control information. Code is coding, Length is a length (for example, a quantity of bits), Mandatory Command indicates whether the information is mandatory information, and ReplyType indicates whether a reply to the information can be delayed. This is not specifically limited herein.

For example, a format of the control information sent by the reader/writer to the tag may be shown in Table 4.

**Table 4**

| | Command | Payload | CRC |
|---|---|---|---|
| #of bits | 8 | 1+various | 16 |
| description | 11101111 | 0--disable | CRC-16 |
| | | 1--enable | |

"various" represents a variable length, and content of the "various" length may include a channel coding parameter, such as a bit rate, a coding scheme, and a configuration. This is not specifically limited herein. 0 represents disable (disable), and 1 represents able (able). Certainly, 0 may alternatively represent able (able), and 1 may alternatively represent disable (disable). This is not specifically limited herein.

For example, the reply information sent by the tag to the reader/writer may carry new RN 16 as a new handle used by a user to process a subsequent message with channel coding, and a format of the reply information may be shown in Table 5.

**Table 5**

| | Command | Payload | RN | CRC |
|---|---|---|---|---|
| #of bits | 8 | 1 | 16 | 16 |
| description | 11101110 | 0--enable | Handle or new RN16 | CRC-16 |
| | | 1--disable | | |

"various" represents a variable length, and content of the "various" length may include a channel coding parameter, such as a bit rate, a coding scheme, and a configuration. This is not specifically limited herein.

(2) The tag does not support the channel coding capability or the tag does not enable the channel coding capability, that is, the first information is repeatedly sent.

In embodiments of this application, there are a plurality of cases of repeatedly sending the first information. The following separately describes the cases.
1. The tag repeatedly executes an action of sending the first information to the reader/writer, in other words, the tag sends the first information to the reader/writer for a plurality of times.
2. The tag repeats data of the first information to obtain new first information, and then sends the new first information to the reader/writer together, that is, the first information includes a plurality of pieces of repeated data, where the data may be of bit-level repetition, or may be of block repetition.

In embodiments of this application, there are a plurality of cases in which the reader/writer may increase the transmission range of the first information. The foregoing several cases are merely examples. In actual application, the reader/writer may increase the transmission range of the first information in another manner. This is not specifically limited herein.

Step 603: The reader/writer determines the capability of the tag based on the first information.

After receiving the first information, the reader/writer may determine the capability of the tag based on the first information.

Optionally, the reader/writer may indicate, according to a preset rule or based on the broadcast-type command such as Select or Query, the tag how to report the capability of the tag.

If a form of the first information is the same as the foregoing first case, in other words, the first information includes the RN 16 and the capability information, because the capability information indicates the capability of the tag, the reader/writer may determine the capability of the tag based on the capability information.

If the form of the first information is the same as the foregoing second case, in other words, the first information is the RN 16, and the RN 16 includes the first target bit and the second target bit, the reader/writer may determine the capability of the tag based on the first target bit.

Optionally, the reader/writer may further determine the capability of the tag based on the preamble header of the first information. For example, a specific preamble header can be used only for first information sent by a tag that supports a capability.

For example, the preamble header of the first information sent by the tag that supports the channel coding capability is different from the preamble header of the first information sent by the tag that does not support the channel coding capability.

Optionally, if the reader/writer receives a plurality of pieces of first information sent by the tag and the first information is not encoded, the reader/writer performs blind detection and combines the plurality of pieces of first information, so as to improve coverage of the reader/writer.

Optionally, if the tag reports a category in classification, the reader/writer may further configure the tag, so as to indicate a specific capability used by the tag.

For example, if the reader/writer determines that the tag supports the channel coding capability, and the tag supports an LDPC code and a polar code, the reader/writer may configure the tag, so as to indicate whether the tag uses the LDPC code or the polar code.

Step 604: The reader/writer sends second information to the tag.

After determining the capability of the tag, the reader/writer may send the second information to the tag.

The second information in embodiment of this application may include acknowledge information (namely, ACK information), random number request information (namely, Req_RN), and the like. The acknowledge information is used by the reader/writer to obtain a factory number (such as a PC, an XPC, and an EPC) of the tag. The random number request information is used by the reader/writer to obtain a new 16-bit random number (which may also be referred to as a handle).

Optionally, if the tag reports the capability in an implicit manner, the second information may include the RN 16. Alternatively, a random number in the second information may not have the first target bit (that is, the first information includes incomplete RN 16).

This is equivalent to that, if the first target bit in the RN 16 indicates the capability of the tag, after receiving the first information, the reader/writer may determine whether the first target bit is 0 or 1; and when the reader/writer subsequently sends information to the tag, or the tag subsequently sends information to the reader/writer, the first target bit may be saved, thereby saving energy consumption.

Optionally, after distinguishing categories of tags, the reader/writer may implement multi-function management on a plurality of tags by using some commands together. For example, the reader/writer may select tags of a type based on Select, and then perform inventory on the tags of the type based on Query, so as to implement multi-function management on a tag group.

In embodiments of this application, the reader/writer may determine the capability of the tag based on the first information reported by the tag, so as to differentiate the plurality of tags, so that different operations can be performed on the tags with different capabilities. This avoids same interaction procedures between a reader/writer and all tags in a conventional technology, where the same procedures result in a case in which a tag that may save power consumption cannot save the power consumption.

An embodiment of this application further provides a tag (which may be referred to as an energy saving tag), where the tag is used in an RFID system, and states that are of a state machine and that are supported by the tag include: a ready state, an arbitrate state, a reply state, an acknowledged state, and a secured state, but do not include an open state and/or a killed state.

An embodiment of this application further provides a tag (which may be referred to as an energy saving tag), where the tag is used in an RFID system, and a storage space of the tag does not store an access password and/or a kill password.

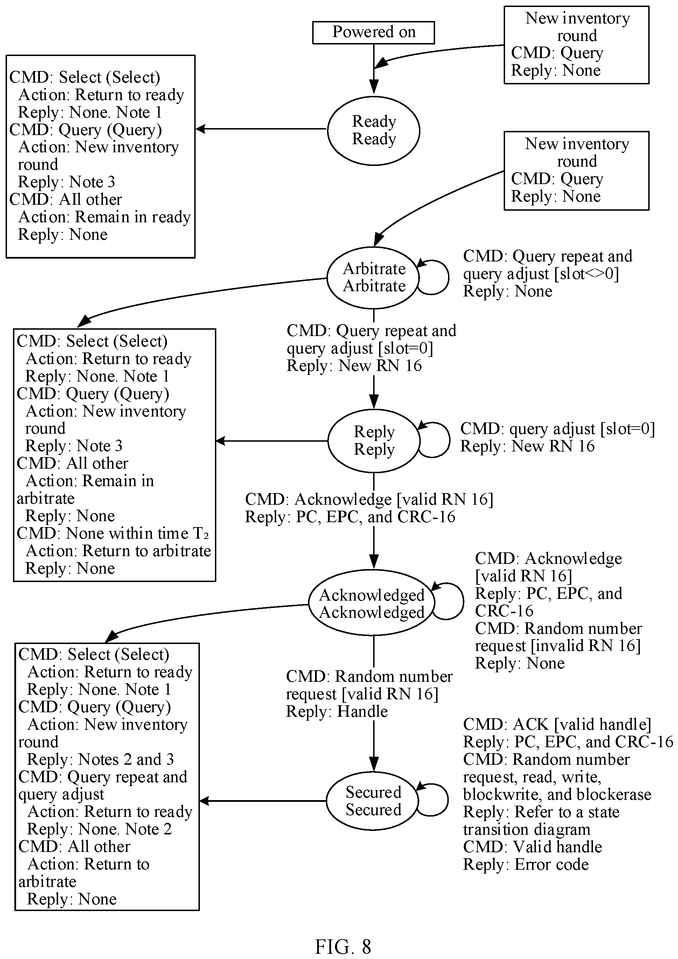

As shown in FIG. 7, some optional signaling is no longer supported, for example, Access. When an open state does not exist, there is no command from Open to Secured. Some alternative signaling is no longer supported, for example, Kill. The Open state and a Killed state may not be supported by the energy saving tag, two state machine transitions are saved on the Tag, and air interface message logic processing of at least two types is reduced. After the state machine tailors the two states, signaling working is shown in FIG. 8. When the tag is in an acknowledged state, if received Req_RN is valid, the tag directly enters a secured state; or if received Req_RN is invalid, the tag does not respond.

Certainly, alternatively, at least one of the foregoing two states (the Open state and the Killed state) may be tailored. This is not specifically limited herein.

If the energy-saving tag tailors the Open state, the access password does not need to be stored. If the energy-saving tag tailors the Killed state, the kill password does not need to be stored. In this way, the storage space of the tag is saved.

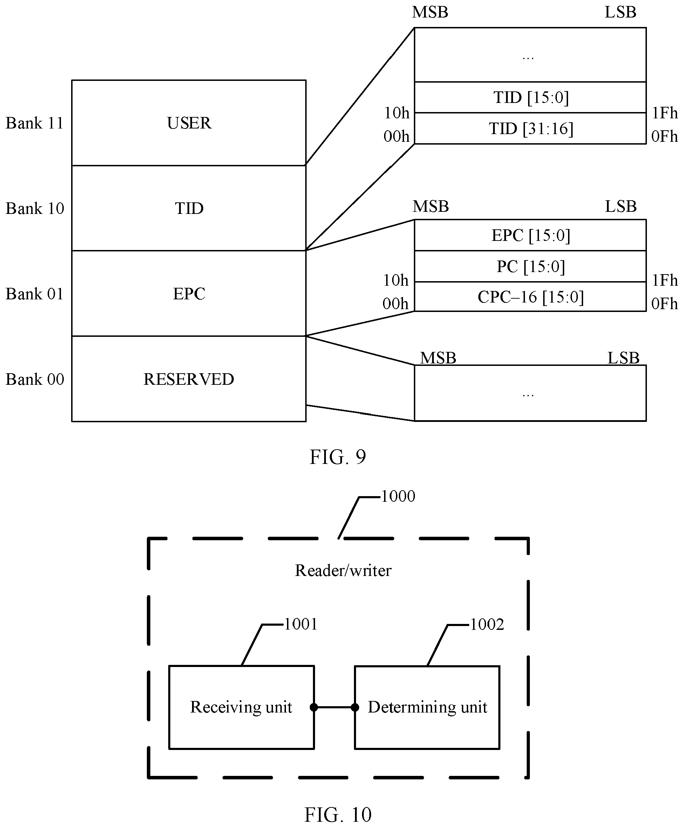

Optionally, if the tag tailors the Open state and the Killed state, in other words, the access password and the kill password do not need to be stored, the storage space of the energy saving tag is shown in FIG. 9.

An embodiment of this application further provides a tag (which may be referred to as a save tag), where the tag is used in an RFID system, the tag supports two of four sessions (sessions), and the sessions are used by a reader/writer to manage a plurality of tags.

The save tag may support one of session 0 and session 2, session 1 and session 3, session 0 and session 1, session 2 and session 3, and the like.

Optionally, two bits of a Session field in a response Query may indicate which two sessions are supported by the save tag. For example, in the session field in the Query, 00 indicates session 0, 01 indicates session 1, 10 indicates session 2, and 11 indicates session 3. Therefore, if Session is X0, it indicates that energy saving tags that support session 0 and session 2 are selected. In other words, the last digits of session 0 and session 2 are both 0.

When the tag identifies a session that is not supported by the tag, the tag does not need to query a session status flag to wait for processing, and directly waits for a next inventory message. In this way, energy consumption of the tag can be saved.

The foregoing describes the communication method in embodiments of this application. The following describes a reader/writer in embodiments of this application. Refer to FIG. 10. An embodiment of a reader/writer 1000 in embodiments of this application includes:
a receiving unit 1001, configured to receive first information sent by a tag, where the first information is the 1^{st} piece of information that is sent by the tag and that is received by the reader/writer in an inventory process; and
a determining unit 1002, configured to determine a capability of the tag based on the first information, where the capability is used by the reader/writer to distinguish the tag from another tag.

In this embodiment, operations performed by units in the reader/writer are similar to those described in the embodiment shown in FIG. 6, and details are not described herein again.

In this embodiment, after the receiving unit 1001 receives the first information, the determining unit 1002 may determine the capability of the tag based on the first information, so as to distinguish the tag from another tag.

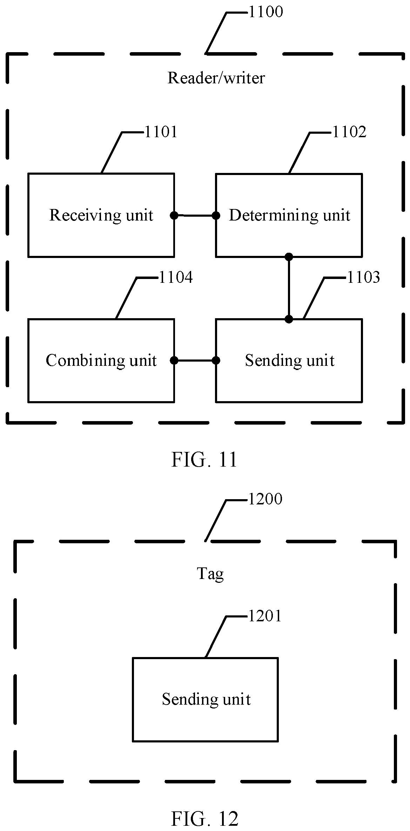

Refer to FIG. 11. Another embodiment of a reader/writer 1100 in embodiments of this application includes:
a receiving unit 1101, configured to receive first information sent by a tag, where the first information is the 1^{st} piece of information that is sent by the tag and that is received by the reader/writer in an inventory process; and
a determining unit 1102, configured to determine a capability of the tag based on the first information, where the capability is used by the reader/writer to distinguish the tag from another tag.

The reader/writer in this embodiment further includes:
a sending unit 1103, configured to send second information to the tag, where a random number in the second information does not have the first target bit; or
a sending unit 1103, configured to send second information to the tag, where the second information includes the 16-bit random number, where
the sending unit 1103 is configured to send query information to the tag, where the query information is used by the reader/writer to obtain the capability of the tag; and
a combination unit 1104, configured to: if there are a plurality of pieces of first information that are sent by the tag and that are received by the reader/writer, combine the plurality of pieces of first information, to improve coverage of the reader/writer.

In this embodiment, operations performed by units in the reader/writer are similar to those described in the embodiment shown in FIG. 6, and details are not described herein again.

In this embodiment, after the receiving unit 1101 receives the first information, the determining unit 1102 may determine the capability of the tag based on the first information, so as to distinguish the tag from another tag. The sending unit 1103 may enable the tag to report the capability of the tag.

The following describes a tag in embodiments of this application. Refer to FIG. 12. An embodiment of a tag 1200 in embodiments of this application includes:
a sending unit 1201, configured to send first information to a reader/writer, where the first information is the 1^{st} piece of information sent by the tag to the reader/writer in an inventory process, the first information is used by the reader/writer to determine a capability of the tag, and the capability is used by the reader/writer to distinguish the tag from another tag.

In this embodiment, operations performed by the units in the tag are similar to those described in the embodiment shown in FIG. 6, and details are not described herein again.

In this embodiment, the sending unit 1201 may report the capability of the tag to the reader/writer, so that the reader/writer can distinguish the tag based on the capability of the tag.

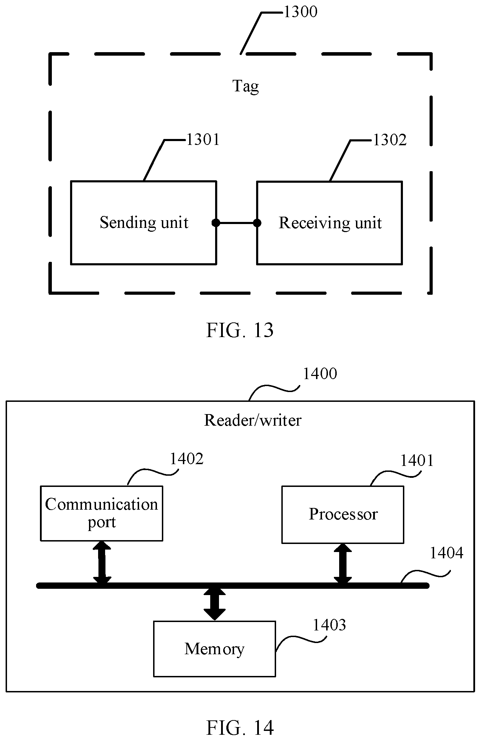

Refer to FIG. 13. Another embodiment of a tag 1300 in embodiments of this application includes:
a sending unit 1301, configured to send first information to a reader/writer, where the first information is the 1^{st} piece of information sent by the tag to the reader/writer in an inventory process, the first information is used by the reader/writer to determine a capability of the tag, and the capability is used by the reader/writer to distinguish the tag from another tag.

The tag in this embodiment further includes:
a receiving unit 1302, configured to receive second information sent by the reader/writer, where a random number in the second information does not have the first target bit; or
a receiving unit 1302, configured to receive second information sent by the reader/writer, where the second information includes the 16-bit random number, where
the receiving unit 1302 is configured to receive query information sent by the reader/writer, where the query information is used by the reader/writer to obtain the capability of the tag.

In this embodiment, operations performed by the units in the tag are similar to those described in the embodiment shown in FIG. 6, and details are not described herein again.

In this embodiment, the sending unit 1301 may report the capability of the tag to the reader/writer, so that the reader/writer can distinguish the tag based on the capability of the tag. Further, after the receiving unit 1302 receives the query information, the sending unit 1301 may report the capability of the tag to the reader/writer.

FIG. 14 is a possible schematic diagram of a reader/writer 1400 in the foregoing embodiment according to an embodiment of this application. The reader/writer 1400 may be specifically the reader/writer in the foregoing embodiment. The reader/writer 1400 may include but is not limited to a processor 1401, a communication port 1402, a memory 1403, and a bus 1404. In this embodiment of this application, the processor 1401 is configured to control and process an action of the reader/writer 1400.

In addition, the processor 1401 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatuses, and units, refer to a corresponding process in the foregoing method embodiments. Details are not described herein again.

It should be noted that the reader/writer shown in FIG. 14 may be specifically configured to implement functions of the steps performed by the reader/writer in the method embodiment corresponding to FIG. 6, and implement technical effects corresponding to the reader/writer. For specific implementations of the reader/writer shown in FIG. 14, refer to descriptions in the method embodiment corresponding to FIG. 6. Details are not described herein again.

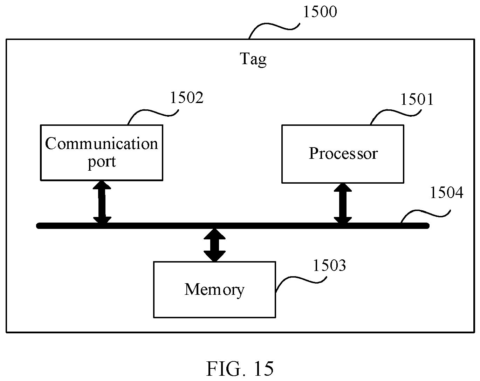

FIG. 15 is a possible schematic diagram of a tag 1500 in the foregoing embodiment according to an embodiment of this application. The tag 1500 may be specifically the tag in the foregoing embodiment. The tag 1500 may include but is not limited to a processor 1501, a communication port 1502, a memory 1503, and a bus 1504. In this embodiment of this application, the processor 1501 is configured to control and process an action of the tag 1500.

In addition, the processor 1501 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatuses, and units, refer to a corresponding process in the foregoing method embodiments. Details are not described herein again.

It should be noted that the tag shown in FIG. 15 may be specifically configured to implement functions of the steps performed by the tag in the method embodiment corresponding to FIG. 6, and implement technical effects corresponding to the tag. For specific implementations of the tag shown in FIG. 15, refer to descriptions in the method embodiment corresponding to FIG. 6. Details are not described herein again.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatuses, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, wherein the method is applied to a radio frequency identification communication system, the radio frequency identification communication system comprises a reader/writer and a tag connected to the reader/writer, and the method comprises:
receiving, by the reader/writer, first information sent by the tag, wherein the first information is the 1^{st} piece of information that is sent by the tag and that is received by the reader/writer in an inventory process; and
determining, by the reader/writer, a capability of the tag based on the first information, wherein the capability is used by the reader/writer to distinguish the tag from another tag.

2. The method according to claim 1, wherein classification corresponding to the capability of the tag comprises at least one of the following:
whether the tag is a power consumption saving tag;
whether the tag is a tag whose transmission distance is greater than a threshold;
whether the tag is a tag that supports channel coding;
whether the tag is a tag that supports modulation; or
whether the tag is a tag that supports sharing a memory with a sensor.

3. The method according to claim 1, wherein the capability of the tag comprises at least one of the following:
a command that is delivered by the reader/writer and that is supported by the tag;
a channel coding scheme supported by the tag;
a modulation scheme supported by the tag;
a sensor type supported by the tag;
a quantity of sessions supported by the tag, wherein the sessions are used by the reader/writer to manage a plurality of tags; or
a size of a storage space in the tag.

4. The method according to any one of claims 1 to 3, wherein the first information comprises a 16-bit random number and capability information, wherein the 16-bit random number is used by the tag to identify information sent by the reader/writer to the tag, and the capability information indicates the capability of the tag.

5. The method according to any one of claims 1 to 3, wherein
the first information is a 16-bit random number, wherein the 16-bit random number comprises a first target bit and a second target bit, the first target bit indicates the capability of the tag, and the second target bit is used by the tag to identify information sent by the reader/writer to the tag; and
the determining, by the reader/writer, a capability of the tag based on the first information comprises:
determining, by the reader/writer, the capability of the tag based on the first target bit.

6. The method according to claim 5, wherein the method further comprises:
sending, by the reader/writer, second information to the tag, wherein a random number in the second information does not have the first target bit.

7. The method according to claim 5, wherein the method further comprises:
sending, by the reader/writer, second information to the tag, wherein the second information comprises the 16-bit random number.

8. The method according to claim 6 or 7, wherein the second information comprises at least one of the following:
acknowledge information, wherein the acknowledge information is used by the reader/writer to obtain a factory number of the tag; or
random number request information, wherein the random number request information is used by the reader/writer to obtain a new 16-bit random number.

9. The method according to any one of claims 1 to 8, wherein the first information comprises a preamble header; and
the determining, by the reader/writer, a capability of the tag based on the first information comprises:
determining, by the reader/writer, the capability of the tag based on the preamble header.

10. The method according to any one of claims 1 to 9, wherein before the receiving, by the reader/writer, first information sent by the tag, the method further comprises:
sending, by the reader/writer, query information to the tag, wherein the query information is used by the reader/writer to obtain the capability of the tag.

11. The method according to any one of claims 1 to 10, wherein the method further comprises:
if there are a plurality of pieces of first information that are sent by the tag and that are received by the reader/writer, combining, by the reader/writer, the plurality of pieces of first information, to improve coverage of the reader/writer.

12. A communication method, wherein the method is applied to a radio frequency identification communication system, the radio frequency identification communication system comprises a reader/writer and a tag connected to the reader/writer, and the method comprises: sending, by the tag, first information to the reader/writer, wherein the first information is the 1^{st} piece of information sent by the tag to the reader/writer in an inventory process, the first information is used by the reader/writer to determine a capability of the tag, and the capability is used by the reader/writer to distinguish the tag from another tag.

13. The method according to claim 12, wherein classification corresponding to the capability of the tag comprises at least one of the following:
whether the tag is a power consumption saving tag;
whether the tag is a tag whose transmission distance is greater than a threshold;
whether the tag is a tag that supports channel coding;
whether the tag is a tag that supports modulation; or
whether the tag is a tag that supports sharing a memory with a sensor.

14. The method according to claim 12, wherein the capability of the tag comprises at least one of the following:
a command that is delivered by the reader/writer and that is supported by the tag;
a channel coding scheme supported by the tag;
a modulation scheme supported by the tag;
a sensor type supported by the tag;
a quantity of sessions supported by the tag, wherein the sessions are used by the reader/writer to manage a plurality of tags; or
a size of a storage space in the tag.

15. The method according to any one of claims 12 to 14, wherein the first information comprises a 16-bit random number and capability information, wherein the 16-bit random number is used by the tag to identify information sent by the reader/writer to the tag, and the capability information indicates the capability of the tag.

16. The method according to any one of claims 12 to 14, wherein
the first information is a 16-bit random number, wherein the 16-bit random number comprises a first target bit and a second target bit, the first target bit indicates the capability of the tag, and the second target bit is used by the tag to identify information sent by the reader/writer to the tag.

17. The method according to claim 16, wherein the method further comprises:
receiving, by the tag, second information sent by the reader/writer, wherein a random number in the second information does not have the first target bit.

18. The method according to claim 16, wherein the method further comprises:
receiving, by the tag, second information sent by the reader/writer, wherein the second information comprises the 16-bit random number.

19. The method according to claim 17 or 18, wherein the second information comprises at least one of the following:
acknowledge information, wherein the acknowledge information is used by the reader/writer to obtain a factory number of the tag; or
random number request information, wherein the random number request information is used by the reader/writer to obtain a new 16-bit random number.

20. The method according to any one of claims 12 to 19, wherein
the first information comprises a preamble header, and the preamble header is used by the reader/writer to identify the capability information of the tag.

21. The method according to any one of claims 12 to 20, wherein before the sending, by the tag, first information to the reader/writer, the method further comprises:
receiving, by the tag, query information sent by the reader/writer, wherein the query information is used by the reader/writer to obtain the capability of the tag.

22. The method according to any one of claims 12 to 21, wherein the method further comprises:
repeating, by the tag, a step in which the tag sends the first information to the reader/writer, to improve a transmission range of the first information.

23. A reader/writer, wherein the reader/writer is used in a radio frequency identification communication system, the radio frequency identification communication system comprises the reader/writer and a tag connected to the reader/writer, and the reader/writer comprises:
a receiving unit, configured to receive first information sent by the tag, wherein the first information is the 1^{st} piece of information that is sent by the tag and that is received by the reader/writer in an inventory process; and
a determining unit, configured to determine a capability of the tag based on the first information, wherein the capability is used by the reader/writer to distinguish the tag from another tag.

24. A tag, wherein the tag is used in a radio frequency identification communication system, the radio frequency identification communication system comprises a reader/writer and the tag connected to the reader/writer, and the tag comprises:
a sending unit, configured to send first information to the reader/writer, wherein the first information is the 1^{st} piece of information sent by the tag to the reader/writer in an inventory process, the first information is used by the reader/writer to determine a capability of the tag, and the capability is used by the reader/writer to distinguish the tag from another tag.

25. A reader/writer, comprising a processor, wherein the processor is coupled to a memory, the memory is configured to store a computer program or instructions, and the processor is configured to execute the computer program or the instructions in the memory, so that the method according to any one of claims 1 to 11 is performed.

26. A tag, comprising a processor, wherein the processor is coupled to a memory, the memory is configured to store a computer program or instructions, and the processor is configured to execute the computer program or the instructions in the memory, so that the method according to any one of claims 12 to 22 is performed.

27. A tag, wherein the tag is used in a radio frequency identification communication system, and states that are of a state machine and that are supported by the tag comprise a ready state, an arbitrate state, a reply state, an acknowledged state, and a secured state, but do not comprise an open state and/or a killed state.

28. A tag, wherein the tag is used in a radio frequency identification communication system, and a storage space of the tag does not store an access password and/or a kill password.

29. A tag, wherein the tag is used in a radio frequency identification communication system, the tag supports two of four sessions, and the sessions are used by a reader/writer to manage a plurality of tags.

30. A chip, wherein the chip comprises a processor and a communication interface, the communication interface is coupled to the processor, and the processor is configured to run a computer program or instructions, so that the method according to any one of claims 1 to 11 is performed.

31. A chip, wherein the chip comprises a processor and a communication interface, the communication interface is coupled to the processor, and the processor is configured to run a computer program or instructions, so that the method according to any one of claims 12 to 22 is performed.

32. A communication system, comprising the reader/writer according to claim 25 and/or the tag according to claim 26.

33. A computer storage medium, wherein the computer storage medium stores instructions; and when the instructions are executed on a computer, the computer is enabled to perform the method according to any one of claims 1 to 11, or the computer is enabled to perform the method according to any one of claims 12 to 22.
